Europäisches Patentamt

**European Patent Office**

Office européen des brevets

(11) Publication number : **0 478 227 A1**

# EUROPEAN PATENT APPLICATION

(21) Application number : **91308557.7**

(22) Date of filing : **19.09.91**

(51) Int. Cl.⁵ : **G11B 7/09,** G11B 21/10, G11B 7/095

(30) Priority : **27.09.90 JP 255465/90**

(43) Date of publication of application :
**01.04.92 Bulletin 92/14**

(84) Designated Contracting States :
**DE FR GB**

(71) Applicant : **International Business Machines Corporation**
**Old Orchard Road**
**Armonk, N.Y. 10504 (US)**

(72) Inventor : **Naoyuki, Kagami**
**Shounanlifetownhanezawadanchi, 26-305, 921 banchi**
**Endoh, Fujisawa-shi, Kanagawa-ken (JP)**
Inventor : **Hiroaki, Kubo**
**1624 banchino 35, Nanasawa**
**Atsugi-shi, Kanagawa-ken (JP)**
Inventor : **Makoto, Takekoshi**
**25-13 Tana-cho, Midori-ku**
**Yokohama-shi, Kanagawa-ken (JP)**

(74) Representative : **Killgren, Neil Arthur**
**IBM United Kingdom Limited Intellectual**
**Property Department Hursley Park**
**Winchester Hampshire SO21 2JN (GB)**

(54) Recovery of track following operation in an optical disk drive apparatus.

(57)   An optical disk drive apparatus is provided which is operable in track following mode and seek mode, wherein, upon the detection of a track following operation error, a seek operation is executed to seek a target track which is a predetermined distance away from the current position. After the seek operation has been performed, an optical head which was moving out of control at the time of the tracking error will land on the target track and the track following operation will be recovered.

EP 0 478 227 A1

FIG. 1

Detect track following error (TES error) — 301

Is current position in outer or inner area? — 302

outer | inner

Seek 5 tracks toward inside — 303

Seek 5 tracks toward outside — 304

Is tracking recovery successful? (TES error) — 305

Yes → Complete

No

Is target position in outer or inner area? — 306

outer area | inner area

Seek 2000 tracks toward inside — 307

Seek 2000 tracks toward outside — 308

This invention relates to an optical disk drive apparatus, and is particularly concerned with means for recovering a track following operation in an optical disk drive apparatus.

In an optical disk drive apparatus it is common to generate a track error signal (TES) which indicates the positional deflection value of a spot of a laser beam from a track center. In track following operation mode wherein an optical head (beam) follows a track, the movement of the optical head is controlled so that the value of the TES is maintained at zero. However, a track following operation sometimes fails due to a disturbed TES caused by an external mechanical shock or vibration, etc. or a flaw or fault, etc. on the optical disk.

Conventionally the tracking servo is interrupted upon the detection of a failure in track following operation, and the initial operation is restarted after the optical head has stopped moving. With such techniques it takes a long time to recover the track following operation.

Japanese Published Unexamined Patent Application (PUPA) No.63-179476 discloses an apparatus wherein upon the switching of a tracking servo from off to on, a velocity servo is operated for a predetermined period of time in order to decrease the frequency of the TES and then the tracking servo operation is started. However this prior art does not relate to the recovery of a track following operation.

An object of this invention is to provide means for recovering track following operations which does not require the optical head to be stopped and the initial operation to be restarted, thus enabling a track following operation to be recovered in a short time when the track following operation fails.

According to this invention, there is provided an optical disk drive apparatus having an optical head for projecting a laser beam onto an optical disk, seek control means for moving said beam from a current track to a target track while crossing tracks, tracking control means for controlling said head to cause said beam to follow a track, and tracking error detection means for detecting failure of a track following operation, characterised in that the seek control means is responsive to the error detection means to initiate a seek operation to a target track a predetermined distance from a track currently being followed when a tracking error is detected. This apparatus permits a track following operation to be recovered by decreasing sufficiently the speed of beam movement during the seek operation from a current track to the target track even if, for example, the beam moves out of control at a high speed when the track following operation is failed.

In preferred embodiments a track at a predetermined distance toward the inside of said optical disk in the radial direction of said optical disk is used as a target track if a current position is toward the outside of said optical disk in the radial direction, and a track at a predetermined distance toward the outside of said optical disk in the radial direction is used as a target track if a current position is toward the inside of said optical disk in said radial direction; this approach prevents a beam from running into the mirror part of the disk during recovery of the track following operation.

The present invention will be described further, by way of example only, with reference to an embodiment thereof as illustrated in the accompanying drawings in which:

FIG.1 is a flowchart showing the main steps carried out by an apparatus for recovering a track following operation in an optical disk drive apparatus in accordance with a preferred embodiment of the present invention;

FIG.2 is a chart showing a waveform of a TES in the preferred embodiment;

FIG.3 is a perspective view showing one part of the preferred embodiment;

FIG.4 is a block diagram showing another part of the preferred embodiment;

FIG.5 is a graph showing a velocity profile of said embodiment; and

FIG.6 and FIG.7 are charts showing waveforms of a TES for the recovery of a track following operation in a conventional apparatus.

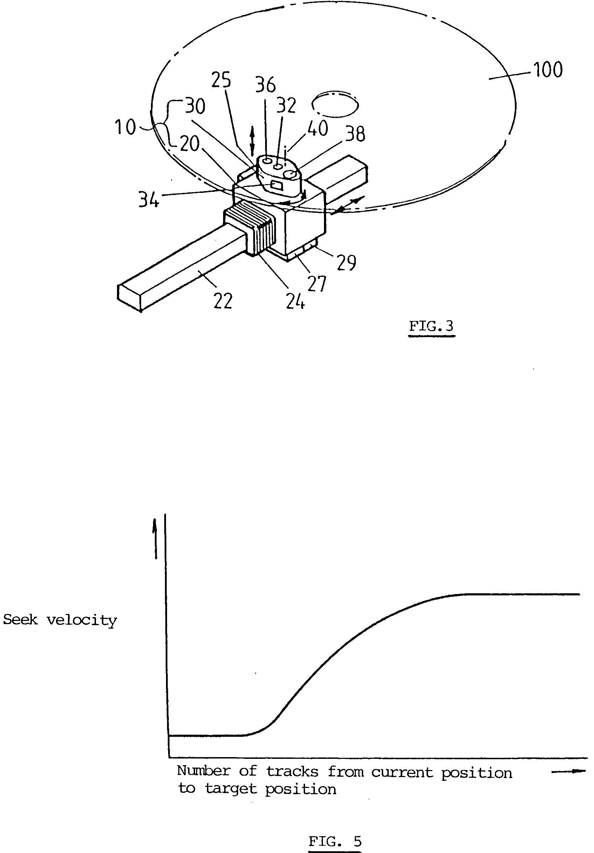

FIG.3 shows a part of an optical disk drive apparatus in accordance with the preferred embodiment of the present invention. An optical head 10 is composed of a coarse actuator 20 and a fine actuator 30. The coarse actuator 20 is supported by a rail 22 so that it can move freely in the radial direction of an optical disk 100 (in the direction of a seek operation), and is driven in the direction of the seek operation by a coarse actuator VCM (Voice Coil Motor) 24.

The fine actuator 30 is supported by the coarse actuator 20 through a shaft 32 such that it can move in the focusing and tracking directions and is driven in the focusing direction and in the tracking direction by a focus VCM 34 and a tracking VCM 36, respectively. The fine actuator 30 has an objective lens 38 fixed from which a laser beam 40 is projected onto the optical disk 100.

Also, the coarse actuator 20 is provided with a relative position (RPE) detecting sensor 25, a focus error signal (FES) detecting sensor 27, and a tracking error signal (TES) detecting sensor 29. The relative position error (RPE) detecting sensor 25, which is for example a split photo sensor with two sensitive parts, detects the quantity of a relative deflection (rotational deflection from a neutral position) of the fine actuator 30 from the coarse actuator 20. The focus error signal (FES) detecting sensor 27, which is for example a split photo sensor with four sensitive parts, detects a positional difference of a spot of the laser beam 40 from a focusing point on the optical disk 100. The tracking error signal (TES) detecting sensor 29, which is for example a split photo sensor with two sensitive parts, detects a positional deviation of a spot of the laser beam 40 from the track center on the optical disk 100.

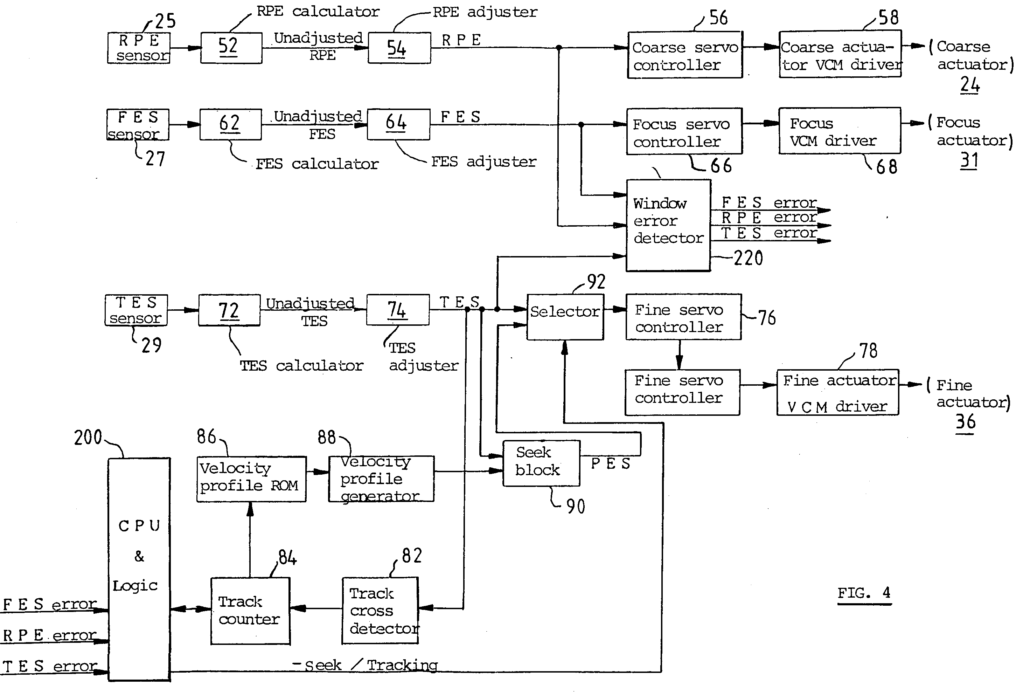

FIG.4 shows another part of the preferred embodiment. In the figure, an output from the relative position error (RPE) detecting sensor 25 is input to a RPE calculator 52. The RPE calculator 52, if the RPE detecting sensor 25 is, for example, a split photo sensor with two sensitive parts, calculates a difference between detected signals from the two photo-sensitive parts and then outputs an unadjusted or raw RPE. An RPE adjuster 54 is used to adjust the gain and the offset of the raw (unadjusted) RPE and the resultant adjusted RPE is then provided to a coarse servo controller 56.

The RPE, after low-pass filtering and compensation for phase progress by the coarse servo controller 56, is provided to a coarse actuator VCM driver 58 from which driving current according to the amplitude and the sign of the RPE, that is, the quantity and the direction of the deflection of the fine actuator 30 to the coarse actuator 20, is provided to the coarse actuator VCM 24.

An output from the FES detecting sensor 27 is input to a FES calculator 62. The FES calculator 62, for example, if the FES detecting sensor 27 is a split photo sensor with four sensitive parts, calculates a difference between a sum of detected signals from a pair of two photo sensitive parts positioned diagonally to each other and a sum of detected signals from the remaining pair of two photo-sensitive parts also positioned diagonally to each other, and then outputs an unadjusted or raw FES. The offset of the raw (unadjusted) FES is then adjusted by a FES adjuster 64, and the resultant adjusted FES is provided to a focus servo controller 66.

The FES, after low-pass filtering and compensation for phase progress by the focus servo controller 66, is provided to a focus VCM driver 68 from which driving current according to the amplitude and sign of the FES, that is, the positional deviation and the direction of a spot of the laser beam 40 from the focus point, is provided to the focus VCM 34.

An output from the TES detecting sensor 29 is input to a TES calculator 72. The TES calculator, for example, if the TES detecting sensor 29 is a split photo sensor with two sensitive parts, calculates a difference between detected signals from a pair of two photo sensitive parts to produce an unadjusted or raw TES. The gain and offset of the raw (unadjusted) TES are then adjusted by the TES adjuster 74 to form an adjusted TES, and the TES thus obtained is provided to the fine servo controller 76, and a tracking VCM driver 78 providing a driving signal which is provided to the tracking VCM 36.

The adjusted TES is also input to a track crossing detector 82 in which the number of times when the optical head 10 (that is, a beam spot) crosses tracks is detected based on a waveform of the TES; the result of such detection is provided to a track counter 84. At the start of a seek operation, a servo system controller (CPU plus logic circuit) 200 provides a value to the track counter 84 indicating a track distance from a current position to a target position. A value contained in the track counter 84 is decreased by subtraction each time the optical head 10 crosses a track during the seek operation.

The controller 200 is provided with a velocity profile ROM 86 in which information, for example, the relation between a track distance from the current position to the target position and a desired velocity, as in FIG.5, used for controlling the seek velocity is stored. When information about the current position is provided based on the value of the track counter 84, the velocity profile ROM 86 outputs a desired velocity, represented as a digital value, at the current position to a velocity profile generator 88 in which the digital value is converted to an analog value which is output to a seek block 90. The seek block 90 compares the value obtained from the velocity profile generator 88 with the current velocity information conveyed by the TES to produce a positioning error signal (PES) which is an integrated value of the result of the comparison. The PES is provided to a selector 92 to which the TES as well as the PES is provided. In seek operation mode, the selector 92 provides the PES to the fine servo controller 76, but, in tracking operation mode, the selector 92 provides the TES to the fine servo controller 76. In seek operation mode, the selector 92 may provide PES to not only the fine servo controller 76 but the coarse servo controller 56.

The adjusted RPE, FES, and TES are each provided to a window error detector 220. The window error detector 220 checks if each amplitude of the RPE, the FES, and the TES is within a predetermined range and generates a RPE error signal, a FES error signal, and a TES error signal respectively to indicate that a failure has occurred during track following if the amplitude of the RPE, FES, and TES is not within the predetermined range. The RPE error signal, the FES error signal, and the TES error signal thus generated are each provided to the controller 200.

The RPE error signal indicates that an angle representing the rotational deflection of the fine actuator 30 to the coarse actuator 20 is too large, and hence it is necessary to return the fine actuator 30 to the neutral position and retry the focus acquisition operation. When the FES error signal is generated, it indicates that the beam is not properly focused on the track and so the TES amplitude value is smaller than it should be and is causing problems with track following. Accordingly, to avoid writing at an erroneous track position in write mode, a write operation is inhibited when the FES error signal is generated.

When the TES error signal, which indicates that a track following operation error has been detected, occurs during a track following operation, then recovery for the track following operation is executed.

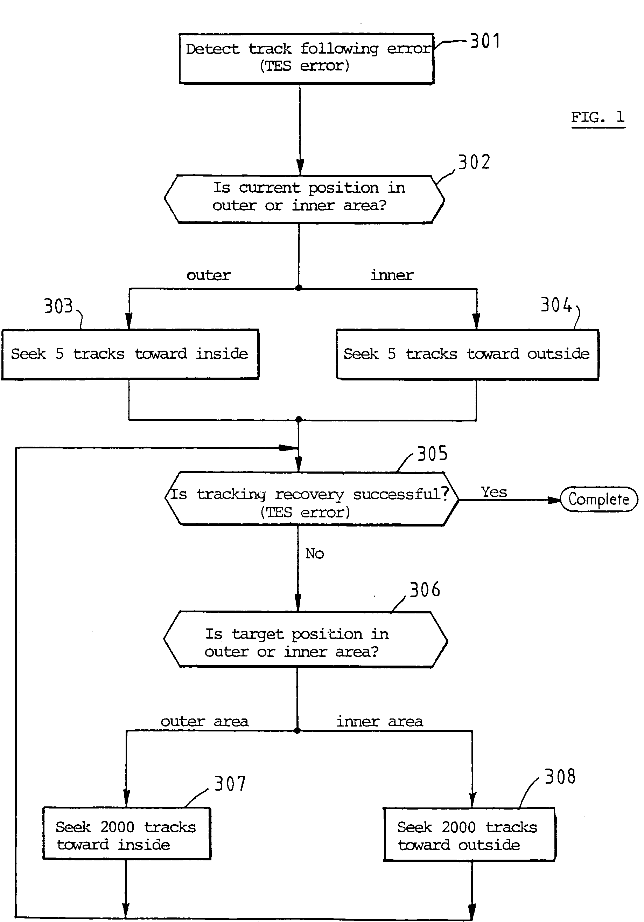

A technique for recovering a track following operation in accordance with the preferred embodiment will now be described with reference to FIG.1 and FIG.4. During a track following operation, the amplitude of the TES is controlled so as to maintain it at zero. However, the amplitude of the TES becomes large and a TES error signal is generated if the track following operation fails, resulting in a track following operation error being detected by the controller 200 to which the TES error signal is providee (Processing block 301). The controller 200, having detected the TES error signal, determines if the current position is in the outer area or the inner area of the optical disk 100 (Decision block 302). The above-mentioned "current position" would in preferred embodiments be the most-recent read information at the current position, and the term "the current position is in the outer area of the optical disk 100" means that the current position is in the outer part of the disk occupying more than half of the total number of tracks on the optical disk 100. The term "the current position is in the inner area of the optical disk 100" means that the current position is in the inner part of the disk occupying less than half of the total number of tracks on the optical disk 100. If the current position is in the outer area of the optical disk 100, a seek operation is performed using a position a distance of 5 tracks away toward the inside of the optical disk 100 as a target position (Processing block 303). On the other hand, if the current position is in the inner area of the optical disk 100, the seek operation is performed using a position a distance of 5 tracks away toward the outside of the optical disk 100 as a target position (Processing block 304). During a seek operation, the movement velocity of the beam 40 is controlled according to a velocity profile (FIG.5), and the seek operation can be altered to a track following operation whether the velocity becomes zero or has a value other than zero, when the beam 40 passes through 5 tracks.

The controller 200 determines if recovery of the track following operation has been successful by checking to see if the TES error signal is still being generated (Decision block 305). If tracking recovery is successful a series of recovery operations are completed, otherwise the controller 200 determines if the target position in the processing block 303 or 304 is toward the outside or the inside of the optical disk 100 (Processing block 306). If said target position is toward the outside of the optical disk 100 then a seek operation is performed using a position a distance of 2000 tracks toward the inside of the optical disk 100 as a target position (Processing block 307). If, on the other hand, said target position is toward the inside of the optical disk 100 a seek operation is performed using a position a distance of 2000 tracks toward the outside of the optical disk 100 as a target position (Processing block 308). When a track following operation error is detected immediately after a seek operation has changed to a track following operation, a seek operation under which a position a distance of 2000 tracks away is used as a target position is performed to recover the track following operation, as shown above. Accordingly, in a case where a seek operation changes to a track following operation, then even if the beam 40 moves out of control, the velocity of the beam 40 can be sufficiently controlled along the curve of the velocity profile (FIG.5) during the seek operation for 2000 tracks to facilitate successful recovery of the track following operation.

If the recovery of a track following operation fails again after a seek operation is performed using a position a distance of 2000 tracks away as a target position, then the seek operation using a target 2000 tracks away is repeated by a predetermined number of times.

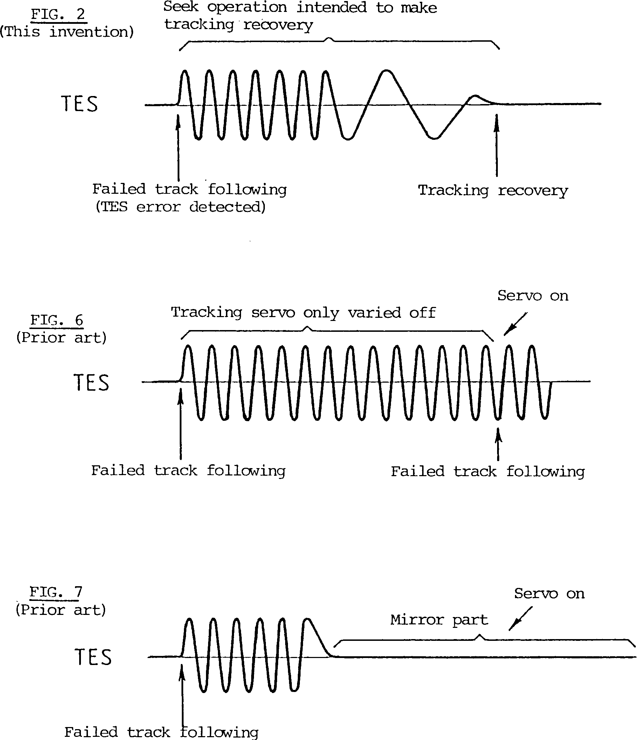

FIG.2 shows a waveform of TES under the operation for track following recovery. As is obvious from the figure, the frequency of the TES decreases gradually in the second half of the period of a seek operation intended to recover the track following operation. This means that the recovery for the track following operation is made smoothly.

It will be noted that the servo control loop is not opened after a track following error (TES error) has been detected, and therefore the track following operation can be smoothly recovered under the condition where there is an external disturbance, mechanical vibration, or an irregular phenomenon caused by an optical disk mounted on a slant, etc.

This is in contrast to the techniques used in the prior art as illustrated in Figures 6 and 7. In such conventional techniques, a tracking servo is interrupted upon the detection of a failure in the track following operation. However, with such techniques, it is impossible to recover a track following operation since the TES remains at a high frequency, as shown in FIG.6, even after said interruption. Further, with a conventional technique, it is impossible to recover a track following operation, as shown in FIG.7, if the optical head passes over the mirror part of an optical disk during said interruption since the TES cannot then be obtained. Accordingly, in such a conventional method, the initial operation is required to restart after the optical head is stopped and a long time is required to recover the track following operation.

By avoiding opening the servo control loop after a track following error (TES error) has been detected, the recovery for a track following operation can be made in a short time.

It will be appreciated also that in a seek operation intended to recover a track following operation, either a "short" (5 tracks) or a "long" (2000 tracks) seek can be selected depending on the expected velocity of the beam 40 (optical head 10) at a time when the track following error has been detected so that the recovery of the track following operation can be made in a short time in accordance with the situation.

It will also be appreciated that according to the seek operation intended to recover track following as described in the embodiment, there is little danger of the beam 40 (optical head 10) running into the mirror part on the innermost circumference or the outermost circumference of the optical disk 100, since the seek operation for tracking recovery can be varied towards either "the inside" or "the outside" of the disk 100 depending upon whether a current or a target position is toward the outside or the inside of the disk 100, respectively.

In the above embodiment, a target distance in the seek operation intended to bring about tracking recovery is varied depending upon whether the recovery is made during a track following operation or for a track following operation immediately after a seek operation has changed to that track following operation. However, it will be appreciated by those skilled in the art that the target distance may be varied based on information about the movement velocity of the beam 40.

As described above the preferred embodiment of the present invention enables tracking recovery to be successfully completed in a short time when a track following error has occurred.

## Claims

1. An optical disk drive apparatus having an optical head for projecting a laser beam onto an optical disk, seek control means for moving said beam from a current track to a target track while crossing tracks, tracking control means for controlling said head to cause said beam to follow a track, and tracking error detection means for detecting failure of a track following operation;

   characterised in that the seek control means is responsive to the error detection means to initiate a seek operation to a target track a predetermined distance from a track currently being followed when a tracking error is detected.

2. An optical disk drive apparatus as claimed in claim 1, wherein said predetermined distance is relatively long if said beam moves at a high velocity but relatively short if said beam moves at a low velocity.

3. An optical disk drive apparatus as claimed in claim 1 or claim 2, wherein said predetermined distance is relatively long if a tracking error in said track following operation is detected immediately after the seek operation by said beam has changed to the track following operation, but is relatively short if said tracking error in the track following operation has been detected during the track following operation.

4. An optical disk drive apparatus as claimed in any preceding claim, wherein if a current track position at which the error is detected is located in the outer area of said optical disk in the radial direction, then said target track is at a predetermined distance from said current track toward the inside of said optical disk in the radial direction, but if said current position is located in the inner area of said optical disk in said radial direction, then said target track is at a predetermined distance toward the outside of said optical disk in the radial direction.

5. An optical disk drive apparatus as claimed in any preceding claim, wherein said seek control means moves said beam from said current track to said target track under the control of a seek velocity as given by information in a velocity profile, and said tracking error detection means generates a track following error signal when the amplitude of a tracking error signal representing the deflection of said beam from a track centre exceeds a predetermined value.

Detect track following error
(TES error) ——301

FIG. 1

Is current position in
outer or inner area? ——302

outer                    inner

303                                      304

Seek 5 tracks toward inside        Seek 5 tracks toward outside

Is tracking recovery successful? ——305        Yes      (Complete)
(TES error)

No

Is target position in
outer or inner area? ——306

outer area              inner area

Seek 2000 tracks ——307        Seek 2000 tracks ——308
toward inside                 toward outside

7

FIG. 2
(This invention)

Seek operation intended to make
tracking recovery

TES

Failed track following
(TES error detected)

Tracking recovery

FIG. 6
(Prior art)

Tracking servo only varied off

Servo on

TES

Failed track following

Failed track following

FIG. 7
(Prior art)

Servo on

Mirror part

TES

Failed track following

FIG. 3

Seek velocity

Number of tracks from current position
to target position

FIG. 5

FIG. 4

European Patent
Office

**EUROPEAN SEARCH REPORT**

Application Number

| DOCUMENTS CONSIDERED TO BE RELEVANT | | | EP 91308557.7 |
|---|---|---|---|
| Category | Citation of document with indication, where appropriate, of relevant passages | Relevant to claim | CLASSIFICATION OF THE APPLICATION (Int. Cl.5) |
| X | PATENT ABSTRACTS OF JAPAN, unexamined applications, P field, vol. 14, no. 31, January 22, 1990 THE PATENT OFFICE JAPANESE GOVERNMENT page 16 P 993 * Kokai-no. 1-267 877 (SONY CORPORATION) * -- | 1 | G 11 B 7/09 G 11 B 21/10 G 11 B 7/095 |
| A | EP - A - 0 363 195 (PIONEER ELECTRONIC CORP.) * Abstract * -- | 1 | |
| A | EP - A - 0 324 859 (CSK K.K.) * Fig. 1; abstract * ---- | 1 | |
| | | | TECHNICAL FIELDS SEARCHED (Int. Cl.5) |
| | | | G 11 B 7/00 G 11 B 21/00 |

The present search report has been drawn up for all claims

| Place of search | Date of completion of the search | Examiner |
|---|---|---|
| VIENNA | 11-12-1991 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)